# NEUE EUROPÄISCHE PATENTSCHRIFT

(11) **EP 0 381 928 B2**
(45) Veröffentlichungstag und Bekanntmachung des Hinweises auf die Entscheidung über den Einspruch: **17.12.1997**
(45) Hinweis auf die Patenterteilung: 19.05.1993
(21) Anmeldenummer: 90100340.0
(22) Anmeldetag: 09.01.1990
(51) Int. Cl.: C09D 5/06

(54) **Wässrige Malfarbe**
Aqueous artist's paint
Peinture aqueuse d'artiste

(30) Priorität: 09.02.1989 DE 3903824
(43) Veröffentlichungstag der Anmeldung: 16.08.1990
(73) Patentinhaber: Pelikan GmbH, 30177 Hannover (DE)
(72) Erfinder: Stubenrauch, Horst-Martin, Dr., D-3000 Hannover 51 (DE); Wesche, Willi, D-3162 Uetze /OT Schwüblingsen (DE)
(74) Vertreter: Hagemann, Heinrich, Dr.rer.nat., Dipl.-Chem.

(56) Entgegenhaltungen:
- DE-A- 3 148 698
- US-A- 2 594 273
- PATENT ABSTRACTS OF JAPAN, Band 11, Nr. 101 (C-413)[2548], 31. März 1987; & JP-A-61 250 068

## Beschreibung

Die Erfindung betrifft eine wässrige Malfarbe auf der Basis eines wasserlöslichen Saccharids, eines Naturfarbstoffs, eines Füllstoffs und gegebenenfalls weiterer Additive.

Malfarben der oben beschriebenen Art sind bekannt. Sie ergeben sich beispielsweise aus Ullmann's Enzyklopädie der technischen Chemie, Bd. 15, 1978, S. 171 ff. in Verbindung mit Ullmann's Enzyklopädie der technischen Chemie. Bd. 11, 1976, S. 99 ff. So sind daraus sogenannte Leimtempera, d.h. bestimmte Künstlerfarben, bekannt, die aufgeschlossene und demzufolge wasserlösliche Stärke, anorganische Füllstoffe und Naturfarbstoffe, z.B. in Form von Kreuzbeerenlacken, Indischgelb etc. enthalten. Diese Künstlerfarben genügen nicht den an Kindermalfarben gestellten Anforderungen. Derartige Farben sollten auch bei versehentlichem Verschlucken durch Kinder keine gesundheitsschädigenden Wirkungen hervorrufen. Darüber hinaus sollten sie aus möglichst sämtlichen Textilien leicht auswaschbar sein. Diese Anforderungen werden durch die derzeit bekannten Malfarben für Kinder nicht erfüllt.

Der Erfindung lag daher die Aufgabe zugrunde. die eingangs bezeichnete wässrige Malfarbe, insbesondere für deren Gebrauch für Kinder, so weiterzubilden, daß sie toxikologisch völlig unbedenklich und darüber hinaus aus möglichst sämtlichen Textilien leicht auswaschbar ist. Erfindungsgemäß wird diese Aufgabe dadurch gelöst, daß sie als Füllstoff etwa 5 bis 60 Gew.-%, eines wasserunlöslischen Polysaccharid sowie etwa 0,5 bis 5 Gew.-% eines synthetischen Lebensmittelfarbstoffs enthält.

Überraschenderweise wurde demzufolge festgestellt, daß durch den Austausch der in den bekannten und oben angeführten Malfarben beschriebenen anorganischen Füllstoffe durch die erwähnten organischen Füllstoffe die gestellte Aufgabe einwandfrei gelöst wird. Es war nicht zu erwarten, daß sich die erwähnten anorganischen Füllstoffe anders verhalten als die erfindungsgemäß erforderlichen organischen Füllstoffe. Vermutlich geht dieses nicht zu erwartende, andersartige Verhalten darauf zurück, daß die Naturfarbstoffe sich mehr oder weniger stark assoziativ mit dem wasserunlöslichen Polysaccharid verbinden und diese Bindung so stark ist, daß die Farbe, wenn sie gelegentlich auf Textilien gelangt, die assoziative Wirkung des Naturfarbstoffs auf die textilen Materialien verhindert. Derartige Vorstellungen lassen sich nicht auf beispielsweise Gips (ungebrannt). Kreide und dergleichen übertragen, da bei diesen anorganischen Füllstoffen nicht erkennbar ist, welche Bindungsmechanismen hier ablaufen könnten. Aufgrund der gezielten erfindungsgemäßen Auswahl von Ausgangsmaterialien ist mit diesem besonderen Vorteil der Auswaschbarkeit aus Textilien beliebiger Art auch der Vorteil der völligen Genießbarkeit bzw. toxikologischen Unbedenklichkeit verbunden, da die Auswahl ohne weiteres so getroffen werden kann, daß alle Bestandteile der Lebensmittelzusatzstoff-Zulassungsverordnung entsprechen. Darüber hinaus gestattet es die Erfindung sogar, was ein weiterer Vorteil ist, die Auswahl so zu treffen, daß die Ausgangsmaterialien aus nachwachsenden Rohstoffen stammen. Die vorliegende Erfindung soll nachfolgend qualitativ und quantitativ noch weiter erläutert werden:

Als Bindemittel kommen im Rahmen der vorliegenden Erfindung wasserlösliche Saccharide in Frage. Dieser Begriff soll weitestgehend verstanden werden und insbesondere umfassen wasserlösliche Oligosaccharide, wie Dextrine, Disaccharide, wie Saccharose, Maltose und Lactose, sowie Monosaccharide, wie Fructose, Dextrose, Galactose, Sorbose sowie Zuckeralkohole, wie Sorbit, Mannit, Xylit und Lactit. Demzufolge sollen unter den Begriff "Saccharide" auch deren modifizierte Formen fallen, wie Zuckeralkohole. Die Bindemittel dieser Art sind in der erfindungsgemäßen Malfarbe in einer Menge von etwa 3 bis 30 Gew.-%, insbesondere etwa 5 bis 20 Gew.-% enthalten.

Der Anteil der erörterten organischen Füllstoffe in der erfindungsgemäßen Malfarbe liegt in dem Bereich von etwa 5 bis 60 Gew.-%, insbesondere etwa 15 bis 45 Gew.-%. Als Füllstoffe kommen insbesondere in Frage: Stärke, Zellulose und stärke- und zelluloseähnliche Materialien. Dabei spielt der Ursprung des jeweils gewählten Stärke- bzw. Zellulosematerials keine wesentliche Rolle.

In der erfindungsgemäßen Malfarbe sind die Naturfarbstoffe vorzugsweise in einer Menge von etwa 0,2 bis 5 Gew.-%, insbesondere etwa 0,5 bis 2 Gew.-%, enthalten. Vorzugsweise werden diese Naturfarbstoffe in Form von Saftkonzentraten und Pflanzenextrakten eingesetzt. Hierbei kann es sich um die Naturfarbstoffe Carotin, Chlorophyll, Xanthophyll, Betanin, Indigo, Kreuzbeerenlack, Indischgelb, Sepiaschwarz, Karmin etc. handeln. Der Wasseranteil der erfindungsgemäßen Malfarbe kann mengenmäßig stark variieren, so beispielsweise zwischen etwa 10 und 70 Gew.-%, insbesondere etwa 20 und 50 Gew.-%. liegen.

Der erfindungsgemäßen Malfarbe können auch verschiedene andere Additive einverleibt werden, so etwa 1 bis 5 Gew.-% Verdicker, 1 bis 8 Gew.-% Feuchthaltemittel bzw. Weichmacher, 0.1 bis 1 Gew.-% Lebensmittelkonservierer und etwa 0,1 bis 1,5 Gew.-% synthetische Lebensmittelfarbstoffe. Als Verdicker kommen insbesondere in Frage Pflanzengummis, wie Xanthangum, Traganth, Alginate, Guarkernmehl und Johannisbrotmehl, als Feuchthaltemittel bzw. Weichmacher Glycerin und Glycerindenvate. Sorbit und Pentaerythrit, als Lebensmittelkonservierer Sorbinsäure, Benzoesäure, o-Phenylphenol und Derivate hiervon, und als synthetische Lebensmittelfarbstoffe Chinolingelb (E 104). Azorubin (E 122). Indigotin 1 (Indigo-Karmin) (E 132) und Kurkumin (E 100). Diese Aufzählung ist, wie ohne weiteres ersichtlich, nicht erschöpfend.

Die mit der erfindungsgemäßen wässrigen Malfarbe erzielbaren Vorteile bestehen, wie bereits dargelegt, insbesondere darin, daß sie toxikologisch völlig unbedenklich und aus nahezu allen Textilien leicht auswaschbar ist. Bei der Erstellung der Rezeptur läßt sich auf natürliche bzw. nachwachsende Ausgangsmaterialien zurückgreifen. Trotz dieser hervorstechenden vorteilhaften Merkmale ist sie im Hinblick auf ihre maltechnischen Eigenschaften mit herkömmlichen wässrigen Malfarben für Kinder ohne weiteres zu vergleichen.

Die Erfindung soll nachfolgend anhand eines Rezepturbeispiels noch näher erläutert werden.

### Beispiel

Es wurde eine wässrige Kindermalfarbe gemäß folgender Rezeptur hergestellt

| | |
|---|---|
| Aufgeschlossene Kartoffelstärke (Bindemittel) | 4 Gew.-% |
| Saccharose (Bindemittel) | 12 Gew.-% |
| Maisstärke (Füllstoff) | 20 Gew.-% |
| Weizenmehl (Type 405) (Füllstoff) | 15 Gew.-% |
| Carotin (Naturfarbstoff) | 2 Gew.-% |
| Chinolingelb E 104 (Lebensmittelfarbstoff) | 0,5 Gew.-% |
| Natriumorthophenylphenolat (Lebensmittelkonservierer) | 0,5 Gew.-% |
| Xanthangum (Verdicker) | 0,5 Gew.-% und |
| Sorbit (Feuchthaltemittel) | 3 Gew.-% |
| Wasser | Rest |

Die nach obiger Rezeptur erhaltene wässrige Malfarbe ist gelb und hat eine pastöse Konsistenz, die sie als Kindermalfarbe geeignet macht. Sie ist demzufolge pinsel- und fingervermalbar. Sie läßt sich selbst mit kaltem Wasser aus fast allen Textilien von Hand unter Rubbeln mit einem Vollwaschmittel oder Kernseife oder in der Waschmaschine bei 30 bis 60°C mit üblichen Vollwaschmitteln auswaschen.

## Patentansprüche

1. Wäßrige Kindermalfarbe enthaltend 3 bis 30 Gew.% Bindemittel in Form eines wasserlöslichen Saccharids, 0,2 bis 20 Gew.-% eines Naturfarbstoffs und 0,5 bis 5 Gew. % eines synthetischen Lebensmittelfarbstoffs, 5 bis 60 Gew. % Füllstoff in Form eines wasserunlöslichen Polysaccharids, 10 bis 70 Gew.-% Wasser und gegebenenfalls Verdicker, Feuchthaltemittel, Weichmacher und weitere Additive.

2. Kindermalfarbe nach Anspruch 1, dadurch gekennzeichnet, daß das wasserunlösliche Polysaccharid Stärke, Cellulose oder ein genießbares wasserunlösliches Derivat hiervon ist.

## Revendications

1. Peinture aqueuse d'artiste pour enfant, entre 3 à 30 % en poids d'un liant sous la forme d'un saccharide soluble dans l'eau, 0,2 à 20 % en poids d'un colorant naturel et de 0,5 à 5 % en poids d'un colorant comestible synthétique comme charge, environ 5 à 60 % en poids d'un polysaccharide insoluble dans l'eau, 10 à 70 % en poids d'eau et le cas échéant un épaississant, un agent humidifiant, un plastifiant et d'autres additifs.

2. Peinture aqueuse d'artiste pour enfant, selon la revendication 1,
caractérisée en ce que
le polysaccharide insoluble dans l'eau est de l'amidon, de la cellulose ou un de leurs dérivés comestibles, insoluble dans l'eau.

## Claims

1. An aqueous artist's paint for children containing 3 to 30 per cent by weight of binding agent in the form of a water-soluble saccharide, 0.2 to 20 per cent by weight of a natural dye and 0.5 to 5 per cent by weight of a synthetic food dye, 5 to 60 per cent by weight of filling agent in the form of a water-insoluble polysaccharide, 10 to 70 per cent by weight of water and if necessary thickener, humectant, softener and further additives.

2. An artist's paint for children according to claim 1, characterised in that the water-insoluble polysaccharide is starch, cellulose or an edible water-insoluble derivative thereof.
